# EUROPÄISCHE PATENTSCHRIFT

(11) **EP 2 705 916 B1**
(45) Veröffentlichungstag und Bekanntmachung des Hinweises auf die Patenterteilung: **08.04.2020**
(21) Anmeldenummer: 13182348.6
(22) Anmeldetag: 30.08.2013
(51) Int. Cl.: B23B 51/08, B21J 5/06

(54) **Bohrwerkzeug sowie Verwendung eines Bohrwerkzeugs**
Drilling tool and use of a drilling tool
Outil de perçage et utilisation d'un outil de perçage

(30) Priorität: 11.09.2012 DE 102012108481
(43) Veröffentlichungstag der Anmeldung: 12.03.2014
(73) Patentinhaber: Atila GmbH, 74933 Neidenstein (DE); DHH Gebäudeservice UG, 74869 Schwarzach (DE)
(72) Erfinder: Waldmann, Oliver, 64823 Groß-Umstadt (DE)
(74) Vertreter: Witte, Weller & Partner Patentanwälte mbB

(56) Entgegenhaltungen:
- EP-A1- 0 150 518
- EP-B1- 0 072 280
- GB-A- 2 091 610

## Beschreibung

Die vorliegende Erfindung betrifft ein Bohrwerkzeug zur Erzeugung von Löchern oder Vertiefungen in Werkstücken, mit einem Aufnahmeschaft zur Aufnahme an einer Antriebseinheit und mit einem Treibabschnitt, der sich in Richtung auf ein werkstückseitiges Ende des Bohrwerkzeugs verjüngt, wobei der Treibabschnitt dazu ausgebildet ist, zumindest teilweise umformend und zumindest teilweise spanabhebend auf ein Werkstück einzuwirken. Die vorliegende Offenbarung befasst sich insbesondere mit Werkzeugen zum Fließbohren, mit anderen Worten mit Fließbohrern. Die Erfindung betrifft ferner eine Verwendung solcher Bohrwerkzeuge.

Bohrwerkzeuge, die zumindest teilweise umformend auf ein Werkstück einwirken können, um etwa Löcher einzubringen, sind im Stand der Technik hinreichend bekannt. Bspw. können mittels so genannter Fließbohrer Bohrungen spanlos in Werkstoffe, insbesondere in Metallwerkstoffe, eingebracht werden. Das Fließbohren geht einher mit einer lokalen Erhitzung des zu bearbeitenden Werkstücks. Die Erhitzung geht auf die Reibung zwischen dem Fließbohrer und dem Werkstück zurück. Nach hinreichendem Wärmeeintrag erweicht das Werkstück bei einer hohen Temperatur, so dass es plastisch umgeformt werden kann. Konventionelle Fließbohrverfahren gelten als spanlose Bohrverfahren, da regelmäßig kein Materialabtrag, sondern lediglich eine Materialumformung erfolgt.

Ferner sind Fließbohrer bekannt, die einfache Schneidspitzen aufweisen, um ein Ansetzen oder Zentrieren des Bohrwerkzeugs vereinfachen zu können. Ein solcher Fließbohrer ist beispielhaft aus der EP 0 150 518 A1 bekannt. Ein mit einer solchen Schneidspitze versehenes Bohrwerkzeug kann etwa auch für Werkstücke verwendet werden, bei denen aufgrund einer Beschichtung ein vollständig spanloser Bohrvorgang erschwert oder gänzlich unmöglich ist. Verschiedene Beschichtungen, insbesondere galvanische Beschichtungen, können einen gezielten punktuellen Wärmeeintrag hemmen, so dass insbesondere das Ansetzen und die Zentrierung des Bohrwerkzeugs mit erhöhtem Aufwand einhergehen.

Aus der GB 2 091 610 A ist ein Bohrwerkzeug nach dem Oberbegriff des Anspruchs 1 bekannt, der einen Abschnitt zum Durchdringen eines Metallteils und einen Abschnitt mit einem zunehmenden polygonalen Querschnitt zum Aufweiten eines Loches und zum Ausbilden einer Buchse um das Loch aufweist.

Aus der EP 0 072 280 B1 ist ein Gewindebohrer bekannt, der aus einem konischen Schneidabschnittt besteht, der Gewindeflanken aufweist und mit Spannuten versehen ist, um Späne nach vorne oder in das Innere des Gewindebohrers zu fördern.

Bekannte Fließbohrverfahren und Fließbohrer erfordern stationäre Bohrvorrichtungen oder zumindest Bohrgestelle, bei denen eine Relativlage des Werkstücks gegenüber der Bohrvorrichtung fixiert werden kann. Ferner sind häufig manuelle oder motorische Vorschubantriebe vorgesehen, um notwendige hohe Vorschubkräfte aufzubringen.

Der Erfindung liegt die Aufgabe zugrunde, ein Bohrwerkzeug zur Erzeugung von Löchern oder Vertiefungen in Werkstücken anzugeben, das verschiedene Vorteile spanloser Bohrverfahren verwirklichen kann und möglichst flexibel ohne großen Rüstaufwand einsetzbar ist. Das Bohrwerkzeug soll sich insbesondere zur Verwendung bei schlecht zugänglichen Werkstücken eignen, bei denen keine aufwändigen Bohrgestelle installiert werden können.

Die Aufgabe der Erfindung wird durch ein Bohrwerkzeug nach Anspruch 1 zur Erzeugung von Löchern oder Vertiefungen in Werkstücken gelöst, mit einem Aufnahmeschaft zur Aufnahme an einer Antriebseinheit und mit einem Treibabschnitt, der sich in Richtung auf ein werkstückseitiges Ende des Bohrwerkzeugs verjüngt, wobei der Treibabschnitt dazu ausgebildet ist, zumindest teilweise umformend und zumindest teilweise spanabhebend auf ein Werkstück einzuwirken, wobei der Treibabschnitt zumindest abschnittsweise einen polygonalen Querschnitt aufweist und an seinem werkstückseitigen Ende mit zumindest einer Schneide versehen ist, an die sich eine Spannut anschließt, die sich in einem Bereich erstreckt, in dem der polygonale Querschnitt eine konvexe Erhebung aufweist, wobei im Anschluss an die Spannut eine Abflachung in den Treibabschnitt eingebracht ist, die sich in Richtung auf ein dem werkstückseitigen Ende abgewandtes rückwärtiges Ende des Treibabschnitts erstreckt, und wobei die Spannut derart gestaltet und angeordnet ist, dass während einer initialen Phase einer Bohrung zunächst kein Kontakt zwischen der betroffenen konvexen Erhebung des polygonalen Querschnitts des Treibabschnitts und dem Werkstück besteht.

Die Aufgabe der Erfindung wird auf diese Weise vollständig gelöst.

Erfindungsgemäß erlaubt nämlich die Gestaltung und Anordnung der Spannut in einer initialen Phase der Bohrung zunächst keinen Kontakt zwischen der betroffenen konvexen Erhebung des polygonalen Querschnitts und dem Werkstück. Mit anderen Worten kann die Spannut gezielt in einem Polygonhügel des Bohrwerkzeugs eingearbeitet sein. Auf diese Weise kann eine - ggf. limitierte - Vorschubkraft in anderen Bereichen des polygonalen Querschnitts mit dem Werkstück in Kontakt treten. Da insgesamt weniger Kontaktstellen wirksam sind, kann die Flächenpressung in verbliebenen Kontaktstellen erhöht werden. Demgemäß kann der Wärmeeintrag optimiert werden. Das Bohrwerkzeug kann auch mit begrenzter Vorschubkraft in das Werkstück eindringen. Die zumindest eine Schneide kann ferner zumindest in einer initialen Phase der Bohrung spanabhebend auf das Werkstück einwirken. Die Spannut, die eine konvexe Erhebung des polygonalen Querschnitts zumindest abschnittsweise ersetzt, kann in vorteilhafter Weise zum Abführen von Spänen ausgestaltet sein.

Je länger die zumindest eine Spannut gestaltet ist, desto länger kann die Spannut die konvexe Erhebung des polygonalen Querschnitts, in deren Bereich sie sich erstreckt, vom unmittelbaren Kontakt mit dem Werkstück abhalten. Es versteht sich, dass die axiale Erstreckung L_{B} des Treibabschnitts auch die axiale Erstreckung der kegelförmigen Spitze umfassen kann.

Es hat sich jedoch gezeigt, dass bestehende Polygonprofile optimiert werden können, um zumindest in einer initialen Phase eines Fließbohrvorgangs die erforderlichen Vorschubkräfte verringern zu können. Indem nämlich zumindest eine konvexe Erhebung des polygonalen Treibabschnitts (auch: Polygonhügel) durch die Spannut "außer Kraft gesetzt" wird, kann zumindest zu Beginn eines Fließbohrvorgangs die Anzahl der Kontaktstellen zwischen dem Bohrwerkzeug und dem Werkstück weiter reduziert werden. Mit zunehmendem Bohrfortschritt, wenn das Bohrwerkzeug weiter in das Werkstück eindringt, kann ein Bereich des Treibabschnitts mit dem Werkstück in Kontakt treten, in dem die Spannut ausgelaufen ist und folglich die konvexe Erhebung des polygonalen Querschnitts wiederum wirksam mit dem Werkstück in Kontakt treten kann. Auf diese Weise kann gegenüber konventionellen Fließbohrwerkzeugen, die ausschließlich umformend auf das Werkstück einwirken oder zusätzlich mit einer Ansatzschneide versehen sind, eine deutliche Reduzierung des Kraftaufwands insbesondere zu Beginn eines Fließbohrvorgangs erzielt werden.

Das Bohrwerkzeug eignet sich insbesondere zur Erzeugung von Löchern in dünnwandigen Werkstücken. Bei dünnwandigen Werkstücken kann es sich insbesondere um Werkstücke handeln, die eine Dicke von ungefähr 0,5 mm bis etwa 5 mm, vorzugsweise von ungefähr 1 mm bis ungefähr 2,5 mm aufweisen. Bei den Werkstücken kann es sich üblicherweise um Metallwerkstücke handeln. Es können beschichtete oder unbeschichtete Werkstücke bearbeitet werden.

Der Treibabschnitt kann grundsätzlich eine einem Konus ähnliche Form aufweisen. Es ist jedoch vorgesehen, dass der Treibabschnitt zumindest teilweise mit einem polygonalen Querschnitt versehen ist. Allgemein kann unter einem polygonalen Querschnitt ein Querschnitt verstanden werden, der hinreichend von einem kreisförmigen Querschnitt abweicht. Bei dem polygonalen Querschnitt kann es sich insbesondere um einen eckigen Querschnitt handeln. Es versteht sich, dass die Ecken des polygonalen Querschnitts (ggf. deutlich) verrundet sein können. Der Treibabschnitt kann etwa eine Form aufweisen, die einer Pyramide oder einem Pyramidenstumpf ähnlich ist, wobei es sich versteht, dass die Kanten der Pyramide, die sich in einer Spitze (oder einer gedachten Spitze) treffen können, verrundet sind. Der polygonale Querschnitt kann grundsätzlich aus einer Abfolge konvexer Erhebungen und konkaver Senken gebildet sein. Der polygonale Querschnitt kann jedoch auch durchgängig konvex ausgebildet sein, wobei die konvexen Erhebungen durch maximale Wölbungen bzw. Größtausdehnungen definiert sein können. Ein stark verrundetes Polygon mit zwei konvexen Erhebungen kann eine nahezu elliptische Gestalt aufweisen. Der polygonale Querschnitt kann üblicherweise eine Mehrzahl konvexer Erhebungen aufweisen. So ist es vorstellbar, drei, vier, fünf oder mehr konvexe Erhebungen vorzusehen. Der polygonale Querschnitt des Treibabschnitts kann insbesondere als Gleichdick ausgestaltet sein. Es ist auch vorstellbar, den polygonalen Querschnitt mit einer sinusförmigen Außenkante zu versehen, wobei eine Nulllinie des Sinus durch einen gedachten Kreis definiert ist. Der Treibabschnitt kann derart gestaltet und dazu ausgebildet sein, ein Loch oder zumindest eine Vertiefung im Werkstück zu erzeugen und bei zunehmendem Bohrfortschritt kontinuierlich zu vergrößern.

Es versteht sich, dass der polygonale Querschnitt derart gestaltet sein kann, dass die konvexen Erhebungen und - falls vorhanden - konkave Senken ggf. nicht makroskopisch bestimmbar sind, etwa mit bloßem Auge. Auch bei einer derartigen Gestaltung des polygonalen Querschnitts, die an einen kreisförmigen Querschnitt angenähert sein kann, können die erfindungsgemäßen Vorteile verwirklicht werden. So kann beispielsweise ein polygonaler Querschnitt vorgesehen sein, bei dem ein Polygonhub etwa 0,15 mm bis 0,25 mm beträgt. Der Polygonhub kann durch einen radialen Abstand zwischen einer Erhebung und einer Senke definiert sein.

Es versteht sich, dass anstatt der zumindest einen Schneide auch eine Mehrzahl von Schneiden verwendbar ist, wobei die Schneiden in geeigneter Weise in Beziehung zu einer Mehrzahl konvexer Erhebungen des polygonalen Querschnitts gesetzt werden können.

Die zumindest eine Spannut kann grundsätzlich spiralförmig um eine Längsachse des Bohrwerkzeugs verlaufen. Mit anderen Worten kann die zumindest eine Spannut zumindest abschnittsweise wendelförmig um den Treibabschnitt gewickelt sein.

In vorteilhafter Weiterbildung weist der Treibabschnitt ferner eine kegelförmige Spitze auf, die das werkstückseitige Ende des Bohrwerkzeugs bildet, wobei zumindest ein Abschnitt der zumindest einen Schneide in der kegelförmigen Spitze angeordnet ist. Bei dem werkstückseitigen Ende des Bohrwerkzeugs kann es sich um das Ende handeln, das dem Aufnahmeschaft abgewandt ist.

Die kegelförmige Spitze kann insbesondere als Ansatzspitze fungieren. Die kegelförmige Spitze kann insbesondere stumpfer bzw. weniger stark verjüngt als der Treibabschnitt gestaltet sein. Auf diese Weise können übermäßige Belastungen und insbesondere Beschädigungen an der Spitze des Bohrwerkzeugs vermieden werden. Es versteht sich, dass die kegelförmige Spitze nicht durchgängig ausgebildet sein muss. Vielmehr kann auch die Spitze zumindest teilweise von der zumindest einen Schneide und der sich an diese anschließenden Spannut durchdrungen sein.

Es ist ferner vorstellbar, eine Bohrspitze mit kegelförmigem Kopf vorzusehen, der zumindest eine Schneide und eine korrespondierende Spannut aufweist, die etwa spiralförmig gestaltet sein kann. Die Bohrspitze kann als integrales Bauteil in den Treibabschnitt integriert sein. Die Bohrspitze kann alternativ auch als Wechselteil oder Wechseleinsatz vorgesehen sein und in einer entsprechenden Aufnahme am Treibabschnitt aufgenommen sein. Auch in diesem Zusammenhang ist es bevorzugt, wenn die Spannut am Treibabschnitt fortgesetzt wird und sich in einem Bereich erstreckt, in dem der polygonale Querschnitt eine konvexe Erhebung aufweist. Es ist auch vorstellbar, an ausgewählten Erhebungen (Polygonhügeln) des Treibabschnitts gezielt Abflachungen einzubringen, und die Bohrspitze so zu orientieren, dass die Spannuten in die Abflachungen auslaufen oder übergehen. Auch auf diese Weise können die gewählten Erhebungen des polygonalen Querschnitts zunächst von einem Kontakt mit dem Werkstück abgehalten werden.

Gemäß einer weiteren Ausgestaltung weist der polygonale Querschnitt des Treibabschnitts eine Mehrzahl von konvexen Erhebungen auf, wobei jeder zweiten der Erhebungen eine Schneide und eine korrespondierende Spannut zugeordnet ist.

Beispielhaft kann der polygonale Querschnitt eine quadratische Grundform aufweisen, die mit entsprechenden Verrundungen versehen ist, wobei zwei Schneiden mitsamt Spannuten vorgesehen sind. Es ist bevorzugt, wenn sich die beiden Spannuten in Bereichen erstrecken, die mit zwei gegenüberliegenden konvexen Erhebungen des polygonalen Querschnitts korrespondieren. Auf diese Weise können etwa zu Beginn eines Fließbohrvorgangs zwei der vier konvexen Erhebungen vom direkten Kontakt mit dem Werkstück ausgenommen sein. Der Kraftaufwand für den Vorschub kann sich in diesem Zusammenhang verringern.

Gemäß einer Weiterbildung ist die zumindest eine Schneide zur korrespondierenden konvexen Erhebung des polygonalen Querschnitts winkelversetzt, wobei die zumindest eine Schneide vorzugsweise entgegen einer Soll-Drehrichtung des Bohrwerkzeugs relativ zur korrespondierenden konvexen Erhebung um einen Versatzwinkel α (Alpha) versetzt ist.

Auf diese Weise kann sichergestellt werden, dass bei einem rotierenden Bohrwerkzeug zunächst die Schneide spanabtragend mit dem Werkstück in Kontakt treten kann, wobei die sich anschließende Spannut in einem Bereich vorgesehen ist, in dem ursprünglich eine korrespondierende konvexe Erhebung vorgesehen ist.

In zweckmäßiger Weiterbildung ist die zumindest eine Schneide in einem Senkbereich des polygonalen Querschnitts des Treibabschnitts angeordnet. Bei dem Senkbereich kann es sich insbesondere um einen konkaven Senkbereich handeln. Der Senkbereich kann jedoch auch als konvexer Senkbereich ausgebildet sein, wobei der Senkbereich gegenüber den konvexen Erhebungen in Richtung auf eine Achse des Bohrwerkzeugs zurückversetzt ist. Mit anderen Worten kann der Senkbereich zu einer kreisförmigen Hüllkurve, die die konvexen Erhebungen umhüllt, in Richtung auf die Achse des Bohrwerkzeugs beabstandet sein.

Gemäß einer weiteren Ausgestaltung weist die zumindest eine Spannut eine axiale Erstreckung L_{D} auf, die zu einer axialen Erstreckung L_{B} des Treibabschnitts ein Verhältnis aufweist, das mindestens ungefähr 1:3, vorzugsweise mindestens ungefähr 1:2, weiter bevorzugt mindestens ungefähr 2:3 beträgt.

Erfindungsgemäß ist beim Bohrwerkzeug im Anschluss an die zumindest eine Spannut eine Abflachung in dem Treibabschnitt eingebracht, insbesondere eine Planfläche, die sich in Richtung auf ein dem werkstückseitigen Ende abgewandtes rückwärtiges Ende des Treibabschnitts erstreckt.

Beispielhaft kann die Abflachung als geschliffene Planfläche ausgeführt sein, die in eine definitionsgemäße Kontur des polygonalen Treibabschnitts eingebracht ist. Auf diese Weise kann etwa dann, wenn es aus Gründen der Spanabführung nicht erforderlich ist, die Spannut länger auszuführen, gleichwohl eine vorteilhafte Kontur geschaffen werden. Es kann auch bei einem bereits relativ tief eingedrungenen Bohrwerkzeug durch die zumindest eine Abflachung weiterhin ein direkter Kontakt zwischen der jeweiligen konvexen Erhebung des polygonalen Querschnitts (auch: Polygonhügel) und dem Werkstück verhindert werden. Es versteht sich, dass die Abflachung derart gestaltet sein kann, dass bei weiter zunehmendem Bohrfortschritt die betroffene konvexe Erhebung mit dem Werkstück in Kontakt treten kann, wenn die Abflachung ausgelaufen ist.

In vorteilhafter Weiterbildung weist die Abflachung eine im Wesentlichen halbelliptische Planfläche auf, deren Scheitelpunkt dem werkstückseitigen Ende des Treibabschnitts abgewandt ist.

Auf diese Weise kann ein besonders sanfter Auslauf der Abflachung realisiert werden. Die Abflachung kann langsam in die definitionsgemäße Kontur des Polygons übergehen, so dass der betroffene Abschnitt des Polygons mit zunehmendem Bohrfortschritt allmählich in Kontakt mit dem Werkstück treten kann.

Gemäß einer weiteren Ausgestaltung erstreckt sich die Abflachung im Wesentlichen in einem Bereich des Treibabschnitts, in dem der polygonale Querschnitt eine konvexe Erhebung aufweist, wobei vorzugsweise die Hauptachse der Abflachung mit einem Maximum der konvexen Erhebung zusammenfällt.

Gemäß einer weiteren Ausgestaltung erstreckt sich die Abflachung im Wesentlichen in einem Bereich des Treibabschnitts, in dem der polygonale Querschnitt eine konvexe Erhebung aufweist, wobei vorzugsweise die Hauptachse der Abflachung mit einem Maximum der konvexen Erhebung zusammenfällt.

Auf diese Weise kann die Abflachung als Fortsatz der Spannut gestaltet werden, wobei die Spannut und die Abflachung die betreffende konvexe Erhebung über einen beträchtlichen Zeitraum des Fließbohrvorgangs vom direkten Kontakt mit dem Werkstück abhalten können. Es versteht sich, dass auch die Abflachung analog zur zumindest einen Schneide etwa bei jeder zweiten konvexen Erhebung einer Mehrzahl konvexer Erhebungen des polygonalen Querschnitts vorgesehen sein kann.

Am Übergang zwischen der Spannut und der Abflachung kann eine Übergangskante ausgebildet sein. Die Abflachung kann, bezogen auf eine Längsachse des Bohrwerkzeugs, flacher als die Spannut gestaltet sein und eine geringere Neigung gegenüber der Längsachse aufweisen.

Gemäß einer weiteren Ausgestaltung weist die Abflachung an ihrem werkstückseitigen Ende eine größere Eindringtiefe als an ihrem rückwärtigen Ende auf. Die Eindringtiefe kann auf die definitionsgemäße Kontur des Polygons bezogen sein. Die Eindringtiefe kann einer Bearbeitungstiefe, etwa bei einem Schleifvorgang, am Bohrwerkzeug entsprechen. Eine sich mit zunehmendem Bohrfortschritt verringernde Eindringtiefe kann dazu führen, dass die konvexe Erhebung, entlang der sich die Abflachung erstreckt, allmählich wieder in Kontakt mit dem Werkstück treten kann.

Gemäß einer weiteren Ausgestaltung geht der Treibabschnitt an seinem dem werkstückseitigen Ende abgewandten rückwärtigen Ende in einen Zylinderabschnitt über, wobei zwischen dem Treibabschnitt und dem Zylinderabschnitt ein Übergangsradius R vorgesehen ist, der vorzugsweise zu einem Durchmesser D des Zylinderabschnitts ein Verhältnis aufweist, das zumindest ungefähr 1,5:1, weiter bevorzugt zumindest ungefähr 2,0:1, noch weiter bevorzugt zumindest ungefähr 3,0:1 beträgt.

Ein besonders großzügig gewählter Übergangsradius kann zur Reduzierung des erforderlichen Anpressdrucks bzw. der erforderlichen Vorschubkraft beitragen, wenn das Bohrwerkzeug tief genug in das Werkstück eingedrungen ist und der Zylinderabschnitt in Kontakt mit dem Werkstück tritt. Es versteht sich, dass der Zylinderabschnitt einen Durchmesser D aufweist, der im Wesentlichen einem Nenndurchmesser der zu erzeugenden Bohrung entsprechen kann.

Gemäß einer vorteilhaften Weiterbildung schließt sich an die zumindest eine Schneide eine Polygonabflachung an, die in den Übergangsradius hineinragt. In diesem Zusammenhang kann sich die Abflachung oder Polygonabflachung in Richtung des rückwärtigen Endes axial bis in einen Bereich erstrecken, in dem der Treibabschnitt nicht mehr präsent ist.

Es ist ferner bevorzugt, wenn das Bohrwerkzeug einen Absatz aufweist, insbesondere einen Anschlagbund, der dazu ausgebildet ist, im Werkstück einen definierten Wulst auszubilden. Der Anschlagbund kann etwa derart gestaltet sein, dass an der dem Bohrwerkzeug zugewandten Seite des Werkstücks im Wesentlichen kein Wulst bzw. kein Kragen verbleibt. Zu diesem Zweck kann überschüssiges Material durch die Öffnung im Werkstück in Richtung der dem Bohrwerkzeug abgewandten Seite gedrängt werden. Es ist jedoch auch vorstellbar, den Anschlagbund derart auszugestalten, dass an der dem Bohrwerkzeug zugewandten Seite des Werkstücks ein definiert überstehender Kragen bzw. eine definiert überstehende Wulst verbleibt. Der Anschlagbund kann sich an den Zylinderabschnitt des Bohrwerkzeugs anschließen.

Die Aufgabe der Erfindung wird ferner gelöst durch die Verwendung eines Bohrwerkzeugs nach einem der vorgenannten Aspekte mit einer handgeführten Bohrmaschine zur Erzeugung einer Bohrung oder Vertiefung in einem Werkstück, wobei das Bohrwerkzeug zumindest teilweise umformend und zumindest teilweise spanabhebend auf das Werkstück einwirkt.

Verschiedene der vorgenannten Gestaltungen können dazu beitragen, einen erforderlichen Anpressdruck bzw. eine erforderliche Vorschubkraft derart zu reduzieren, dass das Bohrwerkzeug auch mit handgeführten Bohrmaschinen benutzt werden kann. Eine handgeführte Bohrmaschine kommt ohne Bohrgestell aus und kann daher flexibel und schnell an beliebigen Orten verwendet werden. Die erforderliche Vorschubkraft kann allein durch einen Bediener der Bohrmaschine aufgebracht werden. Es ist nicht erforderlich, mechanische oder motorische Vorschubantriebe zu benutzen.

In diesem Zusammenhang ist es weiter bevorzugt, wenn eine erforderliche Anpresskraft F zumindest in einer Anfangsphase der Bearbeitung kleiner als 400 N, vorzugsweise kleiner als 350 N, weiter bevorzugt kleiner als 300 N ist.

Insbesondere in der Anfangsphase eines Fließbohrvorgangs ist es bei im Stand der Technik bekannten Fließbohrern erforderlich, hohe Anpresskräfte oder Vorschubkräfte aufzubringen, um das Werkstück hinreichend aufzuweichen, so dass weiterer Bohrfortschritt ermöglicht ist.

Häufig werden mittels Fließbohren in dünnwandige Werkstücke eingebrachte Löcher in weiteren Bearbeitungsschritten mit einem Gewinde versehen. In diesem Zusammenhang weist das Fließbohren besondere Vorteile auf, da der entstehende Wulst eine längere wirksame Lochtiefe bewirken als das Werkstück allein aufgrund seiner Dicke bereitstellen könnte. Somit können mehr Gewindegänge in die Bohrung eingebracht werden. Das Gewinde kann tragfähiger gestaltet werden. In bevorzugter Weise ist das Bohrwerkzeug dazu ausgestaltet, Kernlöcher für ein Gewinde M6 oder für ein Gewinde M8 herzustellen. Ein Kernlochdurchmesser für M6 kann etwa 5,4 mm betragen. Ein Kernlochdurchmesser für M8 kann etwa 7,3 mm betragen. Es versteht sich, dass der Kernlochdurchmesser im Wesentlichen dem Durchmesser des Zylinderabschnitts des Bohrwerkzeugs entsprechen kann. Es versteht sich ferner, dass auch andere Abmessungen des Bohrwerkzeugs vorstellbar sind, etwa um weitere übliche Gewindeabmessungen bereitstellen zu können.

Es ist weiter bevorzugt, wenn die Bohrmaschine beim Bohren mit einer Drehzahl von über 2500 min⁻¹, vorzugsweise mit einer Drehzahl von über 3000 min⁻¹, weiter bevorzugt in einem Drehzahlbereich zwischen ungefähr 3000 min⁻¹ und ungefähr 3500 min⁻¹ betrieben wird. Besonders vorteilhaft ist die Verwendung einer schnelldrehenden Bohrmaschine, etwa einer Bohrmaschine die eine Drehzahl in einem Bereich zwischen etwa 3500 min⁻¹ und 4000 min⁻¹ bereitstellen kann. Mit einer hohen Maximaldrehzahl von etwa 4000 min⁻¹ können insbesondere professionelle Anwender und gewerbliche Nutzer von der Leistungsfähigkeit des Bohrwerkzeugs profitieren. Das Setzen von Fließbohrungen kann flexibel erfolgen, ohne dass aufwändige Bohrgestelle installiert werden müssen. In diesem Zusammenhang ist es weiter bevorzugt, wenn eine Bohrmaschine verwendet wird, die zumindest eine Motorleistung (Nennleistung) von etwa 1000 W, vorzugsweise von etwa 1200 W aufweist. Eine Kombination aus hoher Motorleistung und hoher Drehzahl ermöglicht schnelle Bearbeitungsgänge.

Es kann von Vorteil sein, die Drehzahl der handgeführten Bohrmaschine im Vergleich zu ständerbasierten Bohrmaschinen beim Fließbohren mit dem Bohrwerkzeug anzuheben. Eine erhöhte Drehzahl kann die reduzierte Anpresskraft zumindest teilweise kompensieren, so dass auch mit verringerter Anpresskraft oder Vorschubkraft ein beträchtlicher Bohrfortschritt bzw. eine beträchtliche Bohrleistung erzielt werden kann.

Weitere Merkmale und Vorteile der Erfindung ergeben sich aus der nachfolgenden Beschreibung eines bevorzugten Ausführungsbeispiels unter Bezugnahme auf die Zeichnungen. Es zeigen:
- Fig. 1: eine perspektivische gebrochene Ansicht eines Bohrwerkzeugs;
- Fig. 2: eine frontale, stirnseitige Ansicht des Bohrwerkzeugs gemäß Fig. 1;
- Fig. 3: eine Seitenansicht des Bohrwerkzeugs gemäß Fig. 1;
- Fig. 4: eine perspektivische vergrößerte gebrochene Ansicht des Bohrwerkzeugs gemäß Fig. 1 in einer geänderten Orientierung;
- Fig. 5: eine vereinfachte schematische frontale Ansicht eines Treibabschnitts, mit dem etwa das Bohrwerkzeug gemäß Fig. 1 versehen sein kann;
- Fig. 6: eine vereinfachte Seitenansicht einer Bohrmaschine mit einem Bohrwerkzeug zum Fließbohren; und
- Fig. 7: ein beispielhaftes Diagramm zur Veranschaulichung eines Zusammenhangs zwischen einer Vorschubkraft und einem zeitlichen Bohrfortschritt.

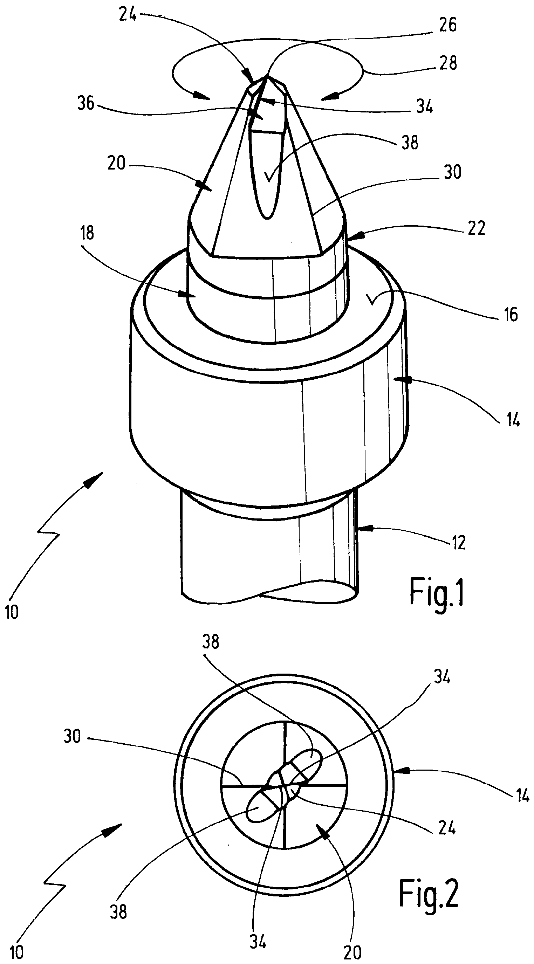

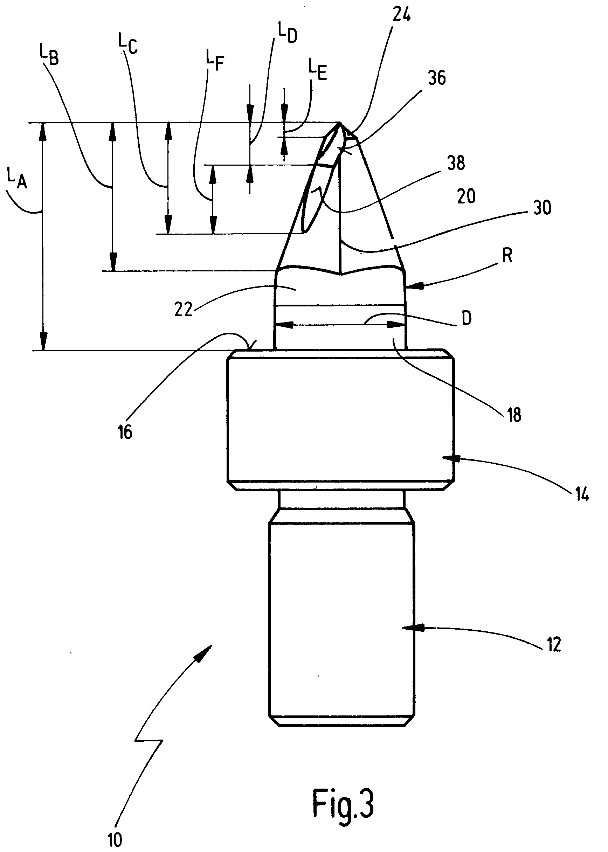

Fig. 1 zeigt eine perspektivische Ansicht eines Bohrwerkzeugs in gebrochener Darstellung, das insgesamt mit 10 bezeichnet ist. Fig. 2 zeigt eine korrespondierende frontale Ansicht und Fig. 3 eine korrespondierende Seitenansicht.

Das Bohrwerkzeug 10 weist einen Aufnahmeschaft 12 auf, der etwa zur Befestigung an einer Bohrmaschine oder einem ähnlichen Bohrgerät dienen kann. Der Aufnahmeschaft 12 kann grundsätzlich eine zylindrische Kontur aufweisen. Der Aufnahmeschaft 12 kann jedoch alternativ auch eine konische Gestaltung, ferner auch eine profilierte Gestaltung aufweisen. Der Aufnahmeschaft 12 ist derart gestaltet, dass das Bohrwerkzeug 10 an einer Werkzeugaufnahme der Bohrmaschine zur Drehmitnahme festgelegt werden kann. In Fig. 1 ist eine Soll-Drehrichtung um eine Längsachse des Bohrwerkzeugs 10 durch einen mit 28 bezeichneten Pfeil angedeutet.

Das Bohrwerkzeug 10 weist ferner einen Bund oder Anschlagbund 14 auf, der sich bei der in Fig. 1 gezeigten Ausgestaltung an den Aufnahmeschaft 12 anschließt. Der Anschlagbund 14 ist mit einem Absatz bzw. einer Absatzfläche 16 versehen. Der Absatz 16 kann mit einer Oberfläche eines zu bearbeitenden Werkstücks in Kontakt treten, um einen Wulst im Werkstück, der sich bei einem Fließbohrvorgang ergeben kann, in gewünschter Weise zu gestalten. Der Bund 14 mit dem Absatz 16 kann derart gestaltet sein, dass sich an einer Seite des Werkstücks, die dem Bohrwerkzeug 10 zugewandt ist, kein wesentlicher Wulst bildet. Dies kann eine im Wesentlichen flache Gestaltung beinhalten. In alternativer Weise kann der Absatz 16 mit dem Bund 14 derart gestaltet sein, dass sich bei einem Fließbohrvorgang auch an der dem Bohrwerkzeug 10 zugewandten Seite des Werkstücks ein definierter Kragen bzw. ein definierter Wulst ergibt.

Das Bohrwerkzeug 10 kann ferner einen Zylinderabschnitt 18 aufweisen, der sich bei der in Fig. 1 gezeigten Ausgestaltung an den Bund 14 anschließt. Der Zylinderabschnitt 18 kann im Wesentlichen kreisrund gestaltet sein. Der Zylinderabschnitt 18 kann einen Durchmesser D aufweisen, der im Wesentlichen einem Soll-Durchmesser eines Kernlochs entspricht, das mithilfe des Bohrwerkzeugs 10 in das Werkstück eingebracht werden kann.

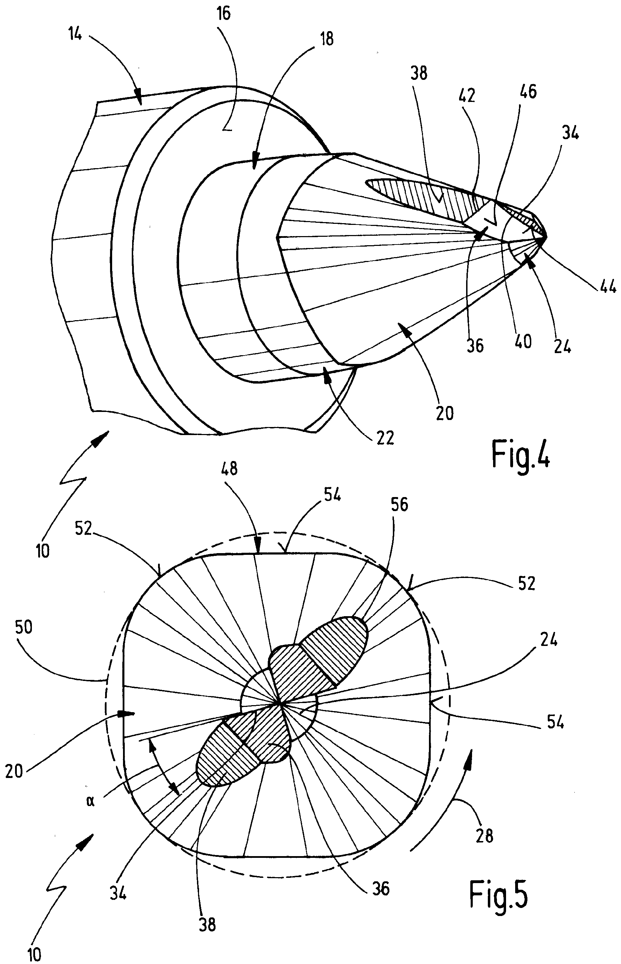

An seinem werkstückseitigen Ende, das dem Aufnahmeschaft 12 abgewandt ist, weist das Bohrwerkzeug 10 einen Treibabschnitt 20 auf. Im Bereich des Aufnahmeschafts 12 kann hingegen ein rückwärtiges Ende des Bohrwerkzeugs ausgebildet sein. Der Treibabschnitt 20 ist vorzugsweise als sich in Richtung auf das werkstückseitige Ende des Bohrwerkzeugs 10 verjüngender Polygon ausgebildet. Ein beispielhafter polygonaler Querschnitt kann Fig. 5 entnommen werden. In diesem Zusammenhang ist anzumerken, dass die in Fig. 2 gezeigte Darstellung des Treibabschnitts 20 nur eine schwach ausgeprägte polygonale Gestaltung zeigt. Wie vorstehend bereits erwähnt, kann jedoch auch mit einer Polygonform, die makroskopisch (für einen menschlichen Betrachter) kaum wahrnehmbar ist, eine Optimierung des Fließbohrvorgangs erzielt werden. Aus Veranschaulichungsgründen wurde in Fig. 5 bewusst eine überzeichnete Darstellung einer Polygonform aufgenommen.

Zwischen dem Treibabschnitt 20 und dem Zylinderabschnitt 18 kann sich ein Übergangsradius 22 erstrecken. Der Übergangsradius 22 kann einen Radius R aufweisen, der bei der in Fig. 3 gezeigten Ausgestaltung etwa dem dreifachen des Durchmessers D des Zylinderabschnitts 18 entspricht. Der Übergangsradius 22 sorgt beim Übergang des Werkstücks zwischen dem Treibabschnitt 20 und dem Zylinderabschnitt 18 für eine sanfte Aufweitung und für eine Reduktion der erforderlichen Anpresskraft oder Zustellkraft.

Der in Fig. 1 gezeigte Treibabschnitt 20 dient insbesondere zum Aufweiten einer in das Werkstück eingebrachten Bohrung. Die Aufweitung erfolgt bis auf ein Nennmaß bzw. einen Nenndurchmesser, der durch den Zylinderabschnitt 18 bestimmt ist. Im Bereich des werkstückseitigen Endes des Bohrwerkzeugs 10 mündet der Treibabschnitt 20 in eine kegelförmige Spitze 24, die in einem Spitzenpunkt 26 kulminiert. Die kegelförmige Spitze 24 kann grundsätzlich eine konische Gestaltung mit einem kreisrunden Querschnitt aufweisen. Die kegelförmige Spitze 24 kann einen Kegelwinkel aufweisen, der größer als ein (gedachter) Kegelwinkel des Treibabschnitts 20 ist. Die kegelförmige Spitze 24 kann eine axiale Erstreckung L_{E} aufweisen, die mit einer axialen Erstreckung L_{B} des Treibabschnitts 20 ein Verhältnis von ungefähr 1:8 bis ungefähr 1:6 aufweist, vergleiche auch Fig. 3. Der Kegelwinkel der kegelförmigen Spitze 24, der einem doppelten Neigungswinkel oder Einstellwinkel entspricht, kann etwa als stumpfer Winkel ausgestaltet sein.

Die in den Figuren 1, 2 und 3 dargestellten Linien 30 im Bereich des Treibabschnitts 20 sind nicht als Kanten, sondern als Tangentiallinien zu verstehen, die tangentiale Übergänge zwischen einzelnen (Polygon-)Segmenten des Treibabschnitts 20 veranschaulicht.

Anhand Fig. 4 wird eine vorteilhafte Gestaltung des Treibabschnitts 20 erläutert, die dazu beitragen kann, erforderliche Vorschubkräfte für das Bohrwerkzeug 10 derart zu reduzieren, dass das flexible Setzen von Fließbohrungen mittels handgeführter Bohrmaschinen ermöglicht ist.

Der Treibabschnitt 20 weist zumindest eine Schneide oder Schneidkante 34 auf. Aus Fig. 2 ist ersichtlich, dass beispielhaft etwa zwei Schneiden 34 vorgesehen sein können. Die Schneidkante 34 kann sich sowohl über die kegelförmige Spitze 24 als auch in dem Bereich des Treibabschnitts 20 erstrecken, in dem dieser einen polygonalen Querschnitt aufweist. Insbesondere beim Übergang zwischen der kegelförmigen Spitze 34 und der Konusgestalt des Treibabschnitts kann die Schneide 34 einen Knick aufweisen. Es versteht sich, dass etwa dann, wenn Materialabtragungen oder Ähnliches am Treibabschnitt 20 vorgesehen sind, der Begriff "polygonaler Querschnitt" zumindest im Sinne einer Definition des ursprünglich zugrundeliegenden Querschnitts weiterhin Anwendung finden kann. An die Schneide 34 schließt sich eine Spannut 36 an, die zur Spanabführung dient. An die Spannut 36 schließt sich eine Abflachung 38 an, die in die sich verjüngende Konusgestalt des Treibabschnitts 20 eingebracht ist. Gemeinsam können die Spannut 36 und die Abflachung 38 Teilbereiche des Treibabschnitts 20 vom unmittelbaren Kontakt mit dem Werkstück abhalten, während das Bohrwerkzeug 10 in das Werkstück eindringt.

Die Schneide 34 kann zumindest teilweise spanabhebend in das Werkstück eindringen. Auf diese Weise kann insbesondere in einer Initialphase des Bohrvorgangs der Anpressdruck signifikant reduziert werden. Ferner kann das Ansetzen oder Zentrieren des Bohrwerkzeugs 10 vereinfacht werden. Gleichwohl kann die verbliebene Gestalt der kegelförmigen Spitze 24 derart auf das Werkstück 10 einwirken, dass dieses erhitzt bzw. erweicht wird.

Gemäß einer Ausgestaltung kann die Spannut 36 eine erste Spanfläche 44 und eine zweite Spanfläche 46 aufweisen, die in einem Nutgrund 40 zusammentreffen. Die erste Spanfläche 44 kann sich an die Schneide 34 anschließen. Die erste Spanfläche 44 kann etwa als Einstich in die kegelförmige Spitze 24 bzw. in den Treibabschnitt 20 ausgestaltet sein. Die zweite Spanfläche 46 kann etwa als konvex gewölbte Fläche ausgestaltet sein, und als Rampe für abzuführende Späne dienen. Die zweite Spanfläche 46 kann mit einer Längsachse des Bohrwerkzeugs 10 einen spitzen Winkel einschließen. Die zweite Spanfläche 46 kann in eine Übergangskante 42 münden, an die sich die Abflachung 38 anschließt. Auf diese Weise kann die Abflachung 38 als Fortsetzung der Spannut 36 bzw. der zweiten Spanfläche 46 gestaltet sein.

Unter Einbeziehung von Fig. 3 werden verschiedene Abmessungen und geometrische Verhältnisse des Bohrwerkzeugs 10 erläutert. Die Schneide 34 und die Spannut 36 können etwa eine axiale Erstrechung L_{D} aufweisen, die zur axialen Erstreckung L_{B} des Treibabschnitts 20 ein Verhältnis aufweist, das mindestens ungefähr 1:3, vorzugsweise mindestens ungefähr 1:2, weiter bevorzugt mindestens ungefähr 1:1,5 beträgt. Die Abflachung 38 kann eine axiale Erstreckung L_{F} aufweisen, die größer ist als die axiale Erstreckung L_{D} der Spannut 36. Gemeinsam können die Spannut 36 und die Abflachung 38 eine axiale Erstreckung L_{C} aufweisen, die mit der axialen Erstreckung L_{B} des Treibabschnitts 20 ein Verhältnis von mindestens ungefähr 0,5:1, vorzugsweise mindestens ungefähr 0,75:1, weiter bevorzugt mindestens ungefähr 0,85:1 beträgt. In einer alternativen Ausgestaltung ist die axiale Erstreckung L_{C} der Spannut 36 und der Abflachung 38 größer als die axiale Erstreckung L_{B} des Treibabschnitts 20. Mit anderen Worten kann etwa die Abflachung 38 in den Übergangsradius 22 hineinragen.

Ein beispielhaftes Bohrwerkzeug 10, mit dem etwa Kernlöcher für ein Gewinde M8 in das Werkstück eingebracht werden können, weist etwa einen Zylinderabschnitt 18 mit einem Durchmesser D von ungefähr 7,3 mm auf. Eine solche Gestaltung kann ferner etwa eine axiale Erstreckung L_{A} des Treibabschnitts 20, des Übergangsradius 22 sowie des Zylinderabschnitts 18 umfassen, die beispielhaft etwa 13,5 mm beträgt. Demgemäß kann die axiale Erstreckung L_{B} des Treibabschnitts 20 etwa 8,5 mm betragen. Die üblichen Abmessungen dieser beispielhaften Gestaltung ergeben sich entsprechend.

Fig. 5 veranschaulicht in vereinfachter Weise eine Zuordnung der Schneide 34, der Spannut 36 und der Abflachung 38 zu Gestaltelementen des polygonalen Querschnitts des Treibabschnitts 20. Zu diesem Zweck ist in Fig. 5 mit 48 ein stark überzeichneter polygonaler Querschnitt 48 angedeutet, der sich innerhalb einer Hüllkurve bzw. eines Vollkreises 50 erstreckt. Der polygonale Querschnitt 48 kann Erhebungen 52 und Senken 54 aufweisen. Die Erhebungen 52 und die Senken 54 können unter einem Rückgriff auf den Vollkreis 50 definiert werden. Die Erhebungen 52 können den Vollkreis 50 tangieren. Die Senken 54 können gegenüber dem Vollkreis 50 nach innen versetzt sein. Bei den Senken 54 kann es sich grundsätzlich um konkave Senken, konvexe Senken oder geradlinige Senken handeln. Da der Begriff "Senke" in Bezug auf den Vollkreis 50 definierbar ist, können die Senken 54 grundsätzlich auch konvex gestaltet sein, so lange sie weniger erhaben als die Erhebungen 52 gestaltet sind.

Die Spannut 36 und die Abflachung 38 sind in einen Bereich eingebracht, in dem der polygonale Querschnitt 48 des Treibabschnitts Erhebungen 52 ausbildet. Auf diese Weise können die betroffenen Abschnitte aufgrund des Materialabtrags von einem In-Kontakt-Treten mit dem Werkstück abgehalten werden. Dies kann insbesondere in einer Initialphase eines Fließbohrvorgangs von Vorteil sein.

In Fig. 5 weist der beispielhafte Querschnitt 48 vier Erhebungen 52 und vier Senken 54 auf. Bei jeder zweiten der Erhebungen 52 ist eine Spannut 36 und eine Abflachung 38 vorgesehen. Die Spannuten 36 sind dabei derart eingebracht, dass die Schneide 34 gegenüber einem Maximum der Erhebung 52 entgegen der Soll-Drehrichtung 28 um einen Winkel α versetzt ist.

Die Polygonform des Querschnitts 48 kann etwa auch durch eine kreisförmig umlaufende Sinuskurve einer äußeren Kante des Querschnitts 48 beschrieben werden. Es versteht sich, dass die Sinuskurve relativ zu einem Referenzkreis definiert sein kann. Der Referenzkreis kann beispielhaft die Nulldurchgänge der Sinuskurve verbinden. Der Referenzkreis kann jedoch ebenso etwa auch der Hüllkurve 50 entsprechen. Maxima der Sinuskurve können die Erhebungen 52 bilden. Minima der Sinuskurve können die Senken 54 bilden. Eine Amplitude der Sinuskurve, also ein (radialer) Abstand zwischen Maxima und Minima kann etwa 0.15 - 0.25 mm betragen. Die Amplitude kann einem Hub der Erhebungen 52 gegenüber den Senken 54 entsprechen.

Die Abflachungen 38 können etwa als halbellipsoidförmige Planfläche ausgebildet sein. Die Abflachungen 38 können einen Scheitelpunkt 56 aufweisen, der auf die entsprechende Erhebung 52 ausgerichtet ist. Die in Fig. 5 gezeigte vereinfachte Ansicht des Treibabschnitts 20 kann grundsätzlich eine Gestaltung veranschaulichen, die in ähnlicher Form am Treibabschnitt 20 des in Fig. 2 gezeigten Bohrwerkzeugs 10 verwirklicht ist. Bei der Darstellung in Fig. 2 wurde jedoch auf die Überhöhung bzw. Überzeichnung des Polygonprofils verzichtet.

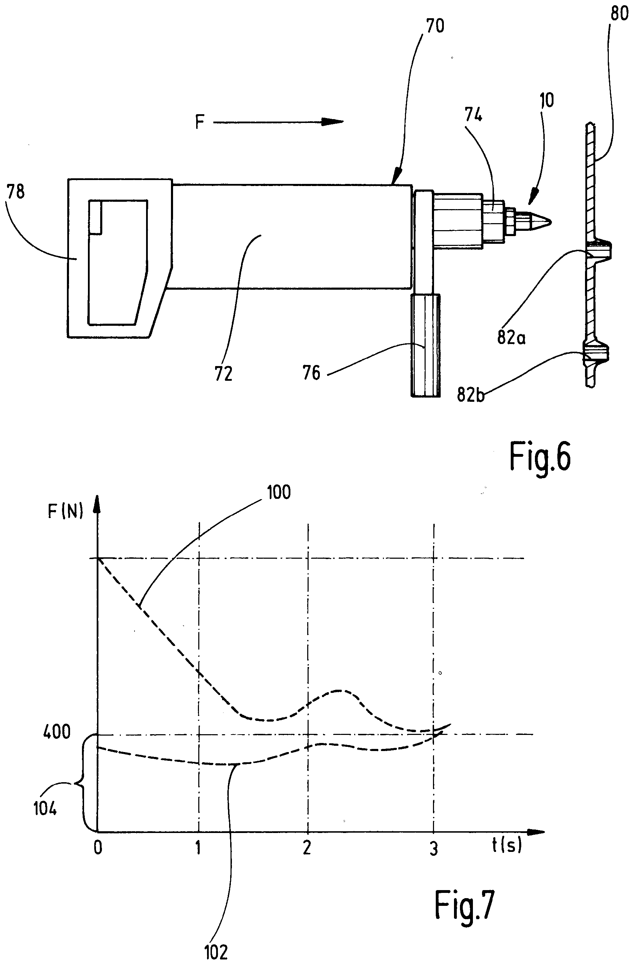

Fig. 6 zeigt in stark vereinfachter Form eine Seitenansicht einer Bohrmaschine 70, die zum Antrieb des Bohrwerkzeugs 10 genutzt werden kann. Bei der Bohrmaschine 70 handelt es sich um eine handgehaltene bzw. handgeführte Bohrmaschine. Mit anderen Worten kann ein Benutzer die Bohrmaschine 70 handhaben, ohne diese auf einem Bohrgestell oder Ähnlichem fixieren zu müssen. Dies beinhaltet jedoch, dass der Benutzer eine erforderliche Vorschubkraft F ohne weitere Hilfsmittel selbsttätig aufbringen muss.

Die Bohrmaschine 70 weist eine Antriebseinheit 72 auf, etwa einen Elektromotor. Die Antriebseinheit 72 ist mit einer Werkzeugaufnahme 74 gekoppelt, bspw. einer Schnellspannaufnahme. An der Werkzeugaufnahme 74 kann das Bohrwerkzeug 10 aufgenommen und zur Drehmitnahme fixiert werden. Die Bohrmaschine 70 kann ferner zumindest einen Griff 76, 78, vorzugsweise zwei Griffe aufweisen.

Die Bohrmaschine 70 mit dem daran aufgenommenen Bohrwerkzeug 10 eignet sich insbesondere dazu, Fließbohrungen in ein Werkstück 80 einzubringen, die zumindest teilweise umformend sowie zumindest teilweise spanabhebend erfolgen. Beispielhaft ist im Werkstück 80 eine Fließbohrung 82a angedeutet, bei der ein Wulst vollständig auf die der Bohrmaschine 70 abgewandten Seite des Werkstücks 80 gedrängt ist. Alternativ dazu veranschaulicht die Fließbohrung 82b ein Loch im Werkstück 80, bei dem beidseitig ein Wulst oder ein Kragen ausgebildet ist. Die Fließbohrungen 82a, 82b eignen sich in vorteilhafter Weise zum Einbringen eines Gewindes.

Fig. 7 zeigt ein Diagramm, das einen Zusammenhang zwischen einem Bohrfortschritt und einer erforderlichen Vorschubkraft bzw. Anpresskraft aufzeigt, vgl. einen mit F bezeichneten Pfeil in Fig. 6. Die Abszisse veranschaulicht einen Zeitablauf einer Bohrung. Die Zeitdauer einer Bohrung korrespondiert mit einem Bohrfortschritt, etwa mit einer Eindringtiefe bzw. einem erzielten Lochdurchmesser. Auf der Ordinate sind erforderliche Handhabungskräfte aufgetragen. Ein mit 100 bezeichneter Graph veranschaulicht erforderliche Handhabungskräfte bzw. Vorschubkräfte bei einem im Stand der Technik bekannten Fließbohrer. Ein mit 102 bezeichneter Graph veranschaulicht erforderliche Vorschubkräfte bzw. Anpresskräfte bei einem Bohrwerkzeug 10, das verschiedene Elemente aufweist, die in der vorhergehenden Beschreibung erläutert wurden. Es wurde bei den den Graphen 100 und 102 zugrundeliegenden Messungen jeweils ein Kernloch mit gleichem Durchmesser erzeugt. Im Stand der Technik bekannte Bohrwerkzeuge erfordern insbesondere hohe Anfangskräfte, die von einem Benutzer nicht ohne Hilfsmittel aufgebracht werden können. Ein erfindungsgemäßes Bohrwerkzeug erlaubt eine hinreichende Reduktion der Vorschubkraft, so dass insbesondere auch in einer Anfangsphase einer Fließbohrung ein manueller Vorschub ermöglicht ist. Ein korrespondierender Kraftbereich ist mit 104 bezeichnet.

## Patentansprüche

1. Bohrwerkzeug (10) zur Erzeugung von Löchern oder Vertiefungen in Werkstücken, mit einem Aufnahmeschaft (12) zur Aufnahme an einer Antriebseinheit (72) und mit einem Treibabschnitt (20), der sich in Richtung auf ein werkstückseitiges Ende des Bohrwerkzeugs (10) verjüngt, wobei der Treibabschnitt (20) dazu ausgebildet ist, zumindest teilweise umformend und zumindest teilweise spanabhebend auf ein Werkstück einzuwirken, wobei der Treibabschnitt (20) zumindest abschnittsweise einen polygonalen Querschnitt (48) aufweist und an seinem werkstückseitigen Ende mit zumindest einer Schneide (34) versehen ist, an die sich eine Spannut (36) anschließt, die sich in einem Bereich erstreckt, in dem der polygonale Querschnitt (48) eine konvexe Erhebung (52) aufweist, wobei die Spannut (36) derart gestaltet und angeordnet ist, dass während einer initialen Phase einer Bohrung zunächst kein Kontakt zwischen der betroffenen konvexen Erhebung (52) des polygonalen Querschnitts (48) des Treibabschnitts (20) und dem Werkstück besteht, **dadurch gekennzeichnet, dass** im Anschluss an die Spannut (36) eine Abflachung (38) in den Treibabschnitt (20) eingebracht ist, die sich in Richtung auf ein dem werkstückseitigen Ende abgewandtes rückwärtiges Ende des Treibabschnitts (20) erstreckt.

2. Bohrwerkzeug (10) nach Anspruch 1, wobei der Treibabschnitt (20) ferner eine kegelförmige Spitze (24) aufweist, die das werkstückseitige Ende des Bohrwerkzeugs (10) bildet, wobei zumindest ein Abschnitt der zumindest einen Schneide (34) in der kegelförmigen Spitze (24) angeordnet ist.

3. Bohrwerkzeug (10) nach Anspruch 1 oder 2, wobei der polygonale Querschnitt (48) des Treibabschnitts (20) eine Mehrzahl von konvexen Erhebungen (52) aufweist, und wobei jeder zweiten der Erhebungen (52) eine Schneide (34) und eine korrespondierende Spannut (36) zugeordnet ist.

4. Bohrwerkzeug (10) nach einem der vorhergehenden Ansprüche, wobei die zumindest eine Schneide (34) zur korrespondierenden konvexen Erhebung (52) des polygonalen Querschnitts (48) winkelversetzt ist, und wobei die zumindest eine Schneide (34) vorzugsweise entgegen einer Soll-Drehrichtung (28) des Bohrwerkzeugs (10) relativ zur korrespondierenden konvexen Erhebung (52) um einen Versatzwinkel α versetzt ist.

5. Bohrwerkzeug (10) nach einem der vorhergehenden Ansprüche, wobei die zumindest eine Schneide (34) in einem Senkbereich (54) des polygonalen Querschnitts (48) des Treibabschnitts (20) angeordnet ist.

6. Bohrwerkzeug (10) nach einem der vorhergehenden Ansprüche, wobei die zumindest eine Spannut (36) eine axiale Erstreckung L_{D} aufweist, die zu einer axialen Erstreckung L_{B} des Treibabschnitts (20) ein Verhältnis aufweist, das mindestens ungefähr 1:3, vorzugsweise mindestens ungefähr 1:2, weiter bevorzugt mindestens ungefähr 2:3 beträgt.

7. Bohrwerkzeug (10) nach einem der vorhergehenden Ansprüche, wobei die Abflachung (38) als Planfläche gestaltet ist.

8. Bohrwerkzeug (10) nach Anspruch 7, wobei die Abflachung (38) eine im Wesentlichen halbelliptische Planfläche umfasst, deren Scheitelpunkt (56) dem werkstückseitigen Ende des Treibabschnitts (20) abgewandt ist.

9. Bohrwerkzeug (10) nach Anspruch 7 oder 8, wobei sich die Abflachung (38) im Wesentlichen in einem Bereich des Treibabschnitts (20) erstreckt, in dem der polygonale Querschnitt (48) eine konvexe Erhebung (52) aufweist, und wobei vorzugsweise die Hauptachse der Abflachung (38) mit einem Maximum der konvexen Erhebung (52) zusammenfällt.

10. Bohrwerkzeug (10) nach einem der Ansprüche 7 bis 9, wobei die Abflachung (38) an ihrem werkstückseitigen Ende eine größere Eindringtiefe als an ihrem rückwärtigen Ende aufweist.

11. Bohrwerkzeug (10) nach einem der vorhergehenden Ansprüche, wobei der Treibabschnitt (20) an seinem dem werkstückseitigen Ende abgewandten rückwärtigen Ende in einen Zylinderabschnitt (18) übergeht, wobei zwischen dem Treibabschnitt (20) und dem Zylinderabschnitt (18) ein Übergangsradius R vorgesehen ist, der vorzugsweise zu einem Durchmesser D des Zylinderabschnitts ein Verhältnis aufweist, das zumindest ungefähr 1,5:1, weiter bevorzugt zumindest ungefähr 2,:1, noch weiter bevorzugt zumindest ungefähr 3,0:1 beträgt.

12. Bohrwerkzeug (10) nach Anspruch 11, wobei wobei sich an die zumindest eine Spannut (38) eine Polygonabflachung (38) anschließt, die in den Übergangsradius R hineinragt.

13. Bohrwerkzeug (10) nach einem der vorhergehenden Ansprüche, ferner aufweisend einen Absatz (16), insbesondere einen Anschlagbund (14), der dazu ausgebildet ist, im Werkstück (80) eine definierten Wulst auszubilden.

14. Verwendung eines Bohrwerkzeugs (10) nach einem der vorgenannten Ansprüche mit einer handgeführten Bohrmaschine (70) zur Erzeugung einer Bohrung oder Vertiefung in einem Werkstück (80), wobei das Bohrwerkzeug (10) zumindest teilweise umformend und zumindest teilweise spanabhebend auf das Werkstück (80) einwirkt.

15. Verwendung nach Anspruch 14, wobei eine erforderliche Anpresskraft F zumindest in einer Anfangsphase der Bearbeitung kleiner als 400 N, vorzugsweise kleiner als 350 N, weiter bevorzugt kleiner als 300 N ist.

## Claims

1. A drilling tool (10) for producing holes or recesses in workpieces, comprising a mounting shaft (12) for mounting on a drive unit (72) and a urging portion (20) that is tapered towards a workpiece-side end of the drilling tool (10), wherein the urging portion (20) is adapted for at least partially deforming and at least partially cutting a workpiece, wherein the urging portion (20) comprises, at least sectionally, a polygonal cross-section (48) and is provided, at its workpiece-side end, with at least one cutting edge (34), which is adjoined by a chip groove (36), which extends in a region in which the polygonal cross-section (48) has a convex elevation (52), wherein the chip groove (36) is designed and arranged such that during an initial stage of a bore there is initially no contact between the affected convex elevation (52) of the polygonal cross-section (48) of the urging portion (20) and the workpiece, **characterized in that** a flattened portion (38) is formed in the urging portion (20), adjoining the chip groove (36), which flattened portion (38) extends towards a rear end of the urging portion (20) that is facing away from the workpiece-side end.

2. The drilling tool (10) according to claim 1, wherein the urging portion (20) further comprises a conical tip (24) forming the workpiece-side end of the drilling tool (10), wherein at least a portion of the at least one cutting edge (34) is arranged in the conical tip (24).

3. The drilling tool (10) according to claim 1 or 2, wherein the polygonal cross-section (48) of the urging portion (20) comprises a plurality of convex projections (52), and wherein each second one of the projections (52) is associated with a cutting edge (34) and a corresponding chip groove (36).

4. The drilling tool (10) according to any one of the preceding claims, wherein the at least one cutting edge (34) is angularly offset relative to the corresponding convex elevation (52) of the polygonal cross-section (48), and wherein the at least one cutting edge (34) is preferably offset, opposite to a nominal direction of rotation (28) of the drilling tool (10), relative to the corresponding convex elevation (52) by an offset angle α.

5. The drilling tool (10) according to any one of the preceding claims, wherein the at least one cutting edge (34) is arranged in a depressed region (54) of the polygonal cross-section (48) of the urging portion (20).

6. The drilling tool (10) according to any one of the preceding claims, wherein the at least one chip groove (36) has an axial extension L_{D} which has a ratio to an axial extension L_{B} of the urging portion (20) that is at least approximately 1:3, preferably at least approximately 1:2, more preferably at least approximately 2:3.

7. The drilling tool (10) according to any one of the preceding claims, wherein the flattened portion (38) is formed as a planar surface.

8. The drilling tool (10) according to claim 7, wherein the flattened portion (38) comprises a substantially semi-elliptical planar surface, the apex (56) of which faces away from the workpiece-side end of the urging portion (20).

9. The drilling tool (10) according to claim 7 or 8, wherein the flattened portion (38) extends substantially in a region of the urging portion (20) in which the polygonal cross-section (48) has a convex elevation (52), and wherein preferably the main axis of the flattened portion (38) coincides with a maximum of the convex elevation (52).

10. The drilling tool (10) according to any one of claims 7 to 9, wherein the flattened portion (38) has a greater penetration depth at its workpiece-side end than at its rear end.

11. The drilling tool (10) according to any one of the preceding claims, wherein the urging portion (20) transitions, at its rear end that is remote from the workpiece-side end, into a cylinder section (18), wherein a transition radius R is provided between the urging portion (20) and the cylinder section (18), which transition radius R preferably has a ratio to a diameter D of the cylinder section which is at least approximately 1.5:1, more preferably at least approximately 2.0:1, yet more preferably at least approximately 3.0:1.

12. The drilling tool (10) according to claim 11, wherein the at least one chip groove (36) is adjoined by a polygonal flattened portion (38), which projects into the transition radius R.

13. The drilling tool (10) according to any one of the preceding claims, further comprising a shoulder (16), in particular a stop collar (14), which is arranged to form a defined bead in the workpiece (80).

14. A use of a drilling tool (10) according to any one of the aforementioned claims with a hand-guided drilling machine (70) for producing a bore or recess in a workpiece (80), wherein the drilling tool (10) acts on the workpiece (80) at least partially in a forming manner and at least partially in a cutting manner.

15. The use according to claim 14, wherein a required contact force F, at least in an initial stage of machining, is less than 400 N, preferably less than 350 N, more *preferably less than 300 N.

## Revendications

1. Outil de perçage (10) pour la réalisation de trous ou de creux dans des pièces, avec une tige de montage (12) pour le montage sur une unité d'entraînement (72) et avec une partie active (20), qui s'affine en direction d'une extrémité de l'outil de perçage (10) proche de la pièce, dans lequel la partie active (20) est configurée pour agir sur une pièce au moins partiellement en la déformant et au moins partiellement en enlevant des copeaux, dans lequel la partie active (20) présente au moins en partie une section transversale polygonale (48) et est munie à son extrémité proche de la pièce d'au moins une arête de coupe (34), à laquelle se raccorde une rainure à copeaux (36), qui s'étend dans une région dans laquelle la section transversale polygonale (48) présente une surélévation convexe (52), dans lequel la rainure à copeaux (36) est configurée et disposée de telle manière que pendant une phase initiale d'un perçage il n'y ait d'abord aucun contact entre la surélévation convexe concernée (52) de la section transversale polygonale (48) de la partie active (20) et la pièce, **caractérisé en ce qu'**un méplat (38) est pratiqué dans la partie active (20) à la suite de la rainure à copeaux (36) et s'étend en direction d'une extrémité arrière de la partie active (20) à l'opposé de l'extrémité proche de la pièce.

2. Outil de perçage (10) selon la revendication 1, dans lequel la partie active (20) présente en outre une pointe conique (24), qui forme l'extrémité de l'outil de perçage (10) proche de la pièce, dans lequel au moins une partie de ladite au moins une arête de coupe (34) est disposée dans la pointe conique (24).

3. Outil de perçage (10) selon une revendication 1 ou 2, dans lequel la section transversale polygonale (48) de la partie active (20) présente une multiplicité de surélévations convexes (52), et dans lequel une arête de coupe (34) et une rainure à copeaux correspondante (36) sont associées à une surélévation (52) sur deux.

4. Outil de perçage (10) selon l'une quelconque des revendications précédentes, dans lequel ladite au moins une arête de coupe (34) est angulairement décalée par rapport à la surélévation convexe correspondante (52) de la section transversale polygonale (48), et dans lequel ladite au moins une arête de coupe (34) est décalée de préférence inversement à un sens de rotation théorique (28) de l'outil de perçage (10) d'un décalage angulaire α par rapport à la surélévation convexe correspondante (52).

5. Outil de perçage (10) selon l'une quelconque des revendications précédentes, dans lequel ladite au moins une arête de coupe (34) est disposée dans une zone abaissée (54) de la section transversale polygonale (48) de la partie active (20).

6. Outil de perçage (10) selon l'une quelconque des revendications précédentes, dans lequel ladite au moins une rainure à copeaux (36) présente une extension axiale L_{D}, qui présente par rapport à une extension axiale L_{B} de la partie active (20) un rapport qui vaut au moins environ 1:3, de préférence au moins environ 1:2, et de préférence encore au moins environ 2:3.

7. Outil de perçage (10) selon l'une quelconque des revendications précédentes, dans lequel le méplat (38) est formé par une face plane.

8. Outil de perçage (10) selon la revendication 7, dans lequel le méplat (38) comprend une face plane essentiellement semi-elliptique, dont le sommet (56) est à l'opposé de l'extrémité de la partie active (20) proche de la pièce.

9. Outil de perçage (10) selon une revendication 7 ou 8, dans lequel le méplat (38) s'étend essentiellement dans une région de la partie active (20), dans laquelle la section transversale polygonale (48) présente une surélévation convexe (52), et dans lequel de préférence l'axe principal du méplat (38) coïncide avec un maximum de la surélévation convexe (52).

10. Outil de perçage (10) selon l'une quelconque des revendications 7 à 9, dans lequel le méplat (38) présente à son extrémité proche de la pièce une plus grande profondeur de pénétration qu'à son extrémité arrière.

11. Outil de perçage (10) selon l'une quelconque des revendications précédentes, dans lequel la partie active (20) se prolonge à son extrémité arrière située à l'opposé de son extrémité proche de la pièce en une partie cylindrique (18), dans lequel il est prévu entre la partie active (20) et la partie cylindrique (18) un rayon de transition R, qui présente de préférence par rapport au diamètre D de la partie cylindrique, un rapport qui vaut au moins environ 1,5:1; de préférence au moins environ 2,0:1, et de préférence encore au moins environ 3,0:1.

12. Outil de perçage (10) selon la revendication 11, dans lequel un méplat polygonal (38), qui pénètre dans le rayon de transition R, se raccorde à ladite au moins une rainure à copeaux (36).

13. Outil de perçage (10) selon l'une quelconque des revendications précédentes, présentant en outre un épaulement (16), en particulier un collet de butée (14), qui est configuré pour former un bourrelet défini dans la pièce (80).

14. Utilisation d'un outil de perçage (10) selon l'une quelconque des revendications précédentes avec une perceuse manuelle (70) pour réaliser un trou ou un creux dans une pièce (80), dans laquelle l'outil de perçage (10) agit sur la pièce (80) au moins en partie en la déformant et au moins en partie en enlevant des copeaux.

15. Utilisation selon la revendication 14, dans laquelle une force d'application nécessaire F au moins dans une phase initiale du traitement est inférieure à 400 N, de préférence inférieure à 350 N, et de préférence encore inférieure à 300 N.
